# FASCICULE DE BREVET EUROPEEN

(11) **EP 4 110 691 B1**
(45) Date de publication et mention de la délivrance du brevet: **27.03.2024**
(21) Numéro de dépôt: 21706990.5
(22) Date de dépôt: 26.02.2021
(51) Int. Cl.: B64C 11/06, B64C 11/32, B64D 27/00, F01D 5/30, F04D 29/32

(54) **ROTOR DE SOUFFLANTE À AUBES À CALAGE VARIABLE ET TURBOMACHINE ÉQUIPÉE D'UN TEL ROTOR**
FANROTOR MIT SCHAUFELN MIT VARIABLEM ANSTELLWINKEL UND MIT EINEM SOLCHEN ROTOR AUSGESTATTETE TURBOMASCHINE
FAN ROTOR WITH VARIABLE PITCH BLADES AND TURBOMACHINE EQUIPPED WITH SUCH A ROTOR

(30) Priorité: 27.02.2020 FR 2001928
(43) Date de publication de la demande: 04.01.2023
(73) Titulaire: SAFRAN AIRCRAFT ENGINES, 75015 Paris (FR)
(72) Inventeur: JOUDON, Vincent, 77550 MOISSY-CRAMAYEL (FR); SERVANT, Régis Eugène Henri, 77550 MOISSY-CRAMAYEL (FR)
(74) Mandataire: Regimbeau
(86) Numéro de dépôt international: PCT/EP2021/054791
(87) Numéro de publication internationale: WO 2021/170780

(56) Documents cités:
- EP-A2- 1 209 322
- WO-A1-2012/156633
- FR-A1- 2 881 174
- FR-A1- 2 934 873
- FR-A1- 3 005 683

## Description

### DOMAINE DE L'INVENTION

L'invention se situe dans le domaine des rotors de soufflante, carénés (fan) ou non carénés (hélice) et équipés d'aubes à calage variable.

Les applications potentielles sont l'industrie de la propulsion aéronautique, par exemple les turbopropulseurs, les soufflantes à pas variable (en anglais « Variable Pitch Fan ou VPF »), les soufflantes non carénés (en anglais « Unducted Single Fan ou USF »), ou les rotors non carénés à double hélice contrarotative (en anglais « Contra Rotative Open Rotor ou CROR ») mais également l'industrie de l'écologie renouvelable (éoliennes).

L'invention concerne également une turbomachine équipée d'un rotor de soufflante à aubes à calage variable.

### ETAT DE LA TECHNIQUE

On connaît déjà d'après le document FR 2 918 129, un rotor de soufflante comprenant un disque de rotor muni à sa périphérie d'alvéoles destinées à recevoir chacune un pied d'aube, à calage fixe. Ce rotor comprend une cale en composite tissé 3D, intercalée entre le pied d'aube également en composite tissé 3D et le fond de l'alvéole métallique. Lors du montage en force de la cale, celle-ci se déforme élastiquement du fait de sa courbure longitudinale et exerce une pression sous le pied d'aube, qui a pour effet de plaquer le pied d'aube sur les portées de l'alvéole.

Les deux rôles de la cale sont d'assurer le bon positionnement de l'aube dans le disque et d'amortir l'impact du pied d'aube sur le fond de l'alvéole lors d'un choc provoqué, par exemple, par une ingestion d'oiseau dans le rotor.

On connaît également dans l'état de la technique, un rotor de soufflante muni d'aubes à calage variable. Les documents EP 3 010 799 ou FR 3 017 163 décrivent par exemple un pivot comprenant un support d'aube, muni d'un logement destiné à recevoir un pied d'aube, ce support d'aube étant solidaire d'un support rotatif, monté radialement sur un moyeu d'hélice tout en pouvant pivoter autour d'un axe radial du rotor.

Le document WO2012/156633 décrit un rotor de soufflante dont les aubes ne sont pas à calage variable et qui en conséquence ne comprend pas d'attaches montées rotatives autour d'un axe de calage. Ce document décrit simplement l'emploi d'une cale en matériau élastiquement déformable, insérée dans une alvéole de réception d'un pied d'aube.

Le document FR 2 934 873 décrit un rotor de soufflante muni d'alvéoles de réception d'un pied d'aube en forme de queue d'aronde. Une cale est insérée entre le pied d'aube et le fond de l'alvéole.

On connaît également d'après le document FR 2 881 174, un rotor de soufflante à aubes à calage fixe dont le disque de rotor est muni d'une pluralité d'alvéoles de réception des pieds d'aubes. Une cale déformable est insérée entre le fond de l'alvéole et un pied d'aube.

Le document FR 3 005 683 décrit un rotor de soufflante à aubes à calage variable, muni d'une pluralité d'attaches de réception d'un pied d'aube. L'attache comprend une rainure de réception du pied de l'aube et une cale est insérée dans la rainure sous le pied d'aube.

Aucun de ces quatre documents ne décrit, ni ne suggère l'emploi d'une tige de précontrainte. La conception d'une aube de soufflante met en jeu plusieurs disciplines dont les objectifs sont généralement antagonistes. Elle doit permettre d'obtenir des performances aérodynamiques optimales (c'est à dire fournir de la poussée en maximisant le rendement) et de garantir la tenue mécanique de l'aube (c'est à dire tenir les contraintes mécaniques résultant des chargements statiques et dynamiques), tout en limitant la masse de l'aube ainsi que sa signature acoustique. En particulier, l'amélioration des performances aérodynamiques de la soufflante tend vers une augmentation du taux de dilution (en anglais « By Pass Ratio ») pour un moteur à double flux, ce qui se traduit par une augmentation de son diamètre externe et donc de l'envergure de ses aubes.

Dans le même temps, sur les architectures précitées (VPF, USF, CROR et turbopropulseur), le démarrage moteur est effectué à un calage d'aube très ouvert, dit « en drapeau ».

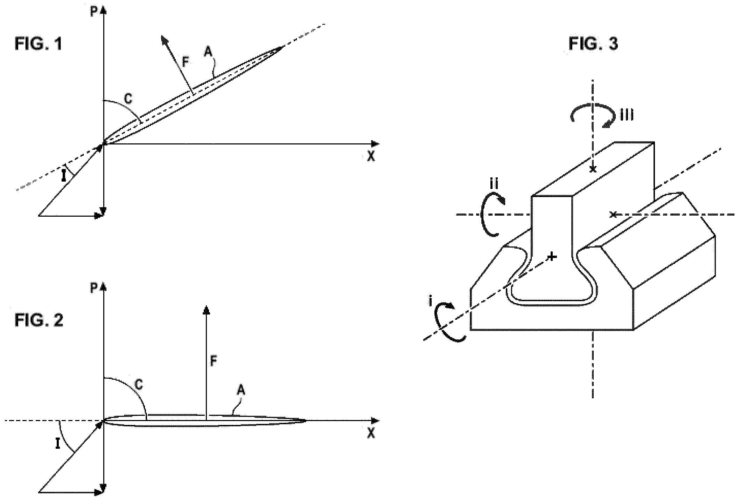

Sur les figures 1 et 2 jointes, qui représentent respectivement un fonctionnement d'aube classique et un fonctionnement en drapeau, on peut voir l'aube A, l'axe X du moteur, le plan P de l'hélice, l'angle de calage C et l'angle d'incidence I.

La puissance est proportionnelle au produit du régime et du couple. Or, le couple est croissant avec l'incidence I, qui peut être augmentée via le calage C. Un démarrage en drapeau permet de consommer la puissance par le couple, ce qui assure la sécurité machine, en garantissant des régimes de soufflante faibles.

L'homme du métier sait que l'effort (flèche F) résultant sur un profil d'aube est en première approximation perpendiculaire à la corde de l'aube et peut se décomposer en deux composantes : la poussée selon l'axe moteur X et la trainée de l'aube dans le plan P de l'hélice. Ainsi, avec l'augmentation du calage des aubes, l'effort résultant se déplace vers le plan P, ce qui a pour effet d'augmenter la trainée du profil aérodynamique et de diminuer la poussée.

Sur la figure 2, la poussée générée par la soufflante est nulle, le couple est maximal et le régime minimal.

Cependant, l'incidence I devient tellement importante que les aubes A subissent alors un écoulement aérodynamique turbulent fortement décollé qui génère une forte excitation vibratoire. En particulier, sur des aubes à large corde et de grande envergure qui génèrent beaucoup de trainée, cet effort aérodynamique F est intense bien que le régime ne soit pas élevé.

Pour une aube à calage variable, montée avec un pivot tel que celui décrit par exemple dans les documents EP 3 010 799 ou FR 3 017 163, cet effort aérodynamique est tellement intense qu'il peut provoquer des mouvements de solide rigide du pied d'aube dans son alvéole qui s'apparentent à du « rotulage », voir les rotations illustrées sur la figure 3 jointe : roulis i (rotation autour de l'axe de brochage de l'aube), tangage ii (rotation autour d'un axe perpendiculaire à l'axe de brochage et à l'axe radial) et enfin lacet iii (rotation autour de l'axe radial).

En effet, lors d'un démarrage en drapeau, le régime réduit de la soufflante ne permet pas de générer un effort centrifuge suffisant pour empêcher ces mouvements induits par l'effort aérodynamique. Il s'en suit un risque d'endommagement de l'aube et de la cale insérée entre le pied d'aube et le logement, du type « usure par frottement », (en anglais « *fretting* »)*,* et de limitation de la durée de vie des aubes de la soufflante.

Pour cette raison, l'attache par pivot, décrite précédemment, ne semble pas en l'état une solution viable pour des aubes de soufflante à calage variable, à large corde et de grande envergure.

### EXPOSE DE L'INVENTION

L'invention a donc pour but de limiter le rotulage de l'aube, lors d'un démarrage du rotor en drapeau et d'éviter son usure prématurée.

A cet effet, l'invention concerne un rotor de soufflante muni d'aubes à calage variable, ce rotor comprenant un disque de rotor muni à sa périphérie d'une pluralité d'attaches, chaque attache comprenant une alvéole de réception du pied de l'une desdites aubes, chaque alvéole comprenant un fond et une cale étant disposée dans chaque alvéole, ladite cale étant réalisée en un matériau élastiquement déformable, au moins un tronçon longitudinal de cette cale ayant un profil transversal en forme d'arc dont la zone centrale est incurvée, de sorte qu'elle comprend une partie bombée saillante en direction de la concavité dudit arc et un creux en direction de la convexité de l'arc , ladite cale est disposée dans l'alvéole de façon que sa partie bombée soit en regard du pied d'aube et que son creux soit orienté vers le fond de l'alvéole.

Conformément à l'invention, chaque attache étant montée rotative par rapport audit disque de rotor autour d'un axe radial de calage, la partie centrale du pied d'aube présente un évidement, ledit pied d'aube est disposé dans l'alvéole de façon que son évidement soit orienté vers le fond de l'alvéole, une tige de précontrainte à au moins une came est également disposée dans chaque alvéole, ladite cale est disposée dans l'alvéole de façon que sa partie bombée soit en regard de l'évidement du pied d'aube, le fond de ladite alvéole comprend autant de cavité d'escamotage que la tige comprend de cames, ladite tige de précontrainte est intercalée entre le creux de la zone centrale de ladite cale et le fond de l'alvéole, de façon que ladite came soit en regard de la cavité d'escamotage correspondante et ladite tige de précontrainte est mobile en rotation autour de son axe longitudinal, de sorte que ladite tige de précontrainte peut être déplacée entre une position de repos, dans laquelle la came est logée dans la cavité d'escamotage, et une position armée, dans laquelle la came exerce une pression radiale sur la zone centrale de la cale de façon à déplacer ladite cale en direction du pied d'aube et de façon que les deux zones latérales de ladite cale, situées de part et d'autre de sa zone centrale soient en contact avec des zones latérales correspondantes du pied d'aube et soient éloignées du fond de l'alvéole.

Grâce à la tige de précontrainte, il est possible une fois celle-ci en position armée, de déformer la cale pour qu'elle appuie alors sur le pied d'aube en se comportant comme un ressort. Ceci permet de compenser la perte en effort centrifuge par l'application d'une précharge importante sous le pied d'aube.

Par rapport à une attache brochée classique, (sans tige de précontrainte), l'invention permet de limiter l'usure prématurée de l'aube lors des phases de démarrage en drapeau. Par ailleurs, le système est avantageux en termes de masse, d'encombrement et de tolérance géométrique.

Selon d'autres caractéristiques avantageuses et non limitatives de l'invention, prises seules ou en combinaison :
- il existe un jeu fonctionnel entre l'évidement du pied d'aube et la partie bombée de la zone centrale de la cale située en regard, ce jeu étant plus important en position de repos de la tige que lorsque la tige est en position armée ;
- le fond de l'alvéole est muni d'une gorge longitudinale destinée à recevoir et à guider la tige de précontrainte et lesdites cavités d'escamotage sont ménagées dans cette gorge ;
- la cale présente une épaisseur plus importante dans sa zone centrale que l'épaisseur de ses extrémités ;
- ladite cale est constituée de plusieurs tronçons réunis par des jonctions plus étroites ;
- un clinquant est disposé dans le fond de l'alvéole de l'attache ;
- l'une des extrémités de la tige de précontrainte, de préférence son extrémité amont, présente une forme, telle que des pans coupés, qui permet sa préhension et son entraînement en rotation autour de son axe longitudinal par un outil ;
- la tige de précontrainte présente à proximité de l'une de ses extrémités, de préférence son extrémité amont, un détrompeur qui s'étend radialement par rapport à l'axe longitudinal de ladite tige et qui est saillant du même côté de la tige que les cames sont saillantes ;
- un verrou amont de rétention axiale du pied d'aube, formé d'une plaque, est inséré dans deux fentes amont ménagées à l'extrémité amont des flancs de ladite alvéole de réception du pied d'aube, ces deux fentes amont étant disposées en V, et un verrou de tige est fixé sur ledit verrou amont de rétention axiale, ce verrou de tige étant muni d'une ouverture de réception de l'une des extrémités de la tige de précontrainte, de préférence son extrémité amont, et d'une encoche de réception du détrompeur de ladite tige, de façon à bloquer ladite tige de précontrainte en position armée ;
- un verrou aval de rétention axiale du pied d'aube, formé d'une plaque est inséré dans deux fentes aval ménagées à l'extrémité aval des flancs de ladite alvéole de réception du pied d'aube, ces deux fentes aval étant disposées en V, ce verrou aval est percé d'un orifice de réception de l'extrémité aval de ladite cale et ce verrou de rétention aval présente sur sa face intérieure une surface formant butée axiale pour l'extrémité aval de ladite tige de contrainte ;
- ladite cale est réalisée en un matériau composite tissé 3D ;
- les aubes sont en matériau composite tissé 3D.

L'invention concerne également une turbomachine, équipée d'un rotor de soufflante à aubes à calage variable tel que précité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est un schéma représentant le fonctionnement d'une aube en mode classique.
La figure 2 est un schéma représentant le fonctionnement d'une aube en mode drapeau.
La figure 3 est une vue schématique en perspective des différentes rotations que peut subir un pied d'aube de l'état de la technique, logé dans une alvéole de disque de rotor.
La figure 4A est une vue schématique en perspective d'une soufflante non carénée, équipée de deux rotors contrarotatifs conformes à l'invention.
La figure 4B est une vue en perspective et en coupe partielle d'une partie du disque de rotor de la soufflante de la figure 4A.
La figure 5 est une vue en perspective d'une alvéole de réception de pied d'aube.
La figure 6 est une vue en perspective de l'alvéole de la figure 5, munie d'un clinquant.
La figure 7 est une vue en perspective de l'alvéole de la figure 5, munie d'un clinquant et dans laquelle est disposée la tige de précontrainte, cette dernière étant en position de repos.
La figure 8 est une vue similaire à la figure 7, mais dans laquelle la tige de précontrainte est en position armée.
La figure 9 est vue en perspective de la cale conforme à un premier mode de réalisation de l'invention et de la tige de précontrainte se trouvant en position de repos.
La figure 10 est une vue en perspective de la cale conforme à un deuxième mode de réalisation de l'invention et de la tige de précontrainte se trouvant en position armée.
La figure 11 est une vue schématique en coupe transversale de la tige de précontrainte, de la cale et du pied d'aube, disposés à l'intérieur d'une alvéole d'une attache de disque de rotor, la tige étant en position de repos.
La figure 12 est une vue schématique en coupe transversale de la tige de précontrainte, de la cale et du pied d'aube, disposés à l'intérieur d'une alvéole d'une attache de disque de rotor, la tige étant dans une position intermédiaire entre sa position de repos et sa position armée.
La figure 13 est une vue schématique en coupe transversale de la tige de précontrainte, de la cale et du pied d'aube, disposés à l'intérieur d'une alvéole d'une attache de disque de rotor, la tige étant en position armée.
La figure 14 est une vue en coupe longitudinale de la tige de précontrainte, de la cale, d'une partie du pied d'aube et de l'alvéole, des verrous de rétention amont et aval et du verrou de tige prise selon un plan de coupe passant par l'axe X2-X'2 de la tige 3.
La figure 15 est une vue en perspective du verrou aval de rétention axiale.
La figure 16A est une vue en perspective du verrou amont de rétention axiale.
La figure 16B est une vue en perspective du verrou amont de rétention, prise selon un angle de vue différent de celui de la figure 16A.
La figure 17 est une vue en perspective du verrou de la tige.
La figure 18 est une vue en perspective du verrou de tige et de la tige de précontrainte maintenue par celui-ci.
La figure 19 est une vue en perspective de l'extrémité amont de l'attache d'aube, de la tige de précontrainte, du verrou de rétention amont et du verrou de tige, ces deux derniers n'étant pas assemblés.
La figure 20 est une vue en perspective de l'extrémité amont de l'attache d'aube, de la tige de précontrainte, du verrou de rétention amont et du verrou de tige, ces deux derniers étant assemblés.
La figure 21 est une vue analogue à la figure 13 représentant les chemins d'effort, en cas de fonctionnement normal du rotor.
La figure 22 est une vue analogue à la figure 13 représentant les chemins d'effort, dans le cas où le pied d'aube est soumis au roulis.

### DESCRIPTION DETAILLEE DE L'INVENTION

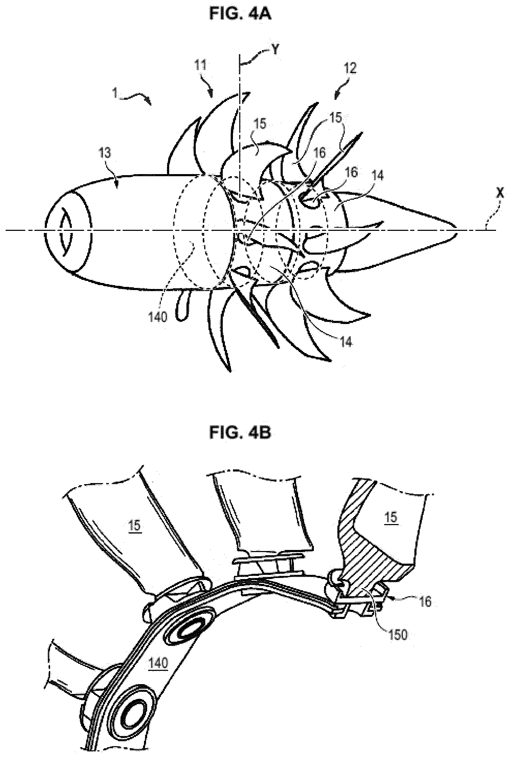

En se reportant à la figure 4A, on peut voir un exemple d'une soufflante 1 non carénée, comprenant deux rotors de soufflante 11, 12 conformes à l'invention. Ils sont montés sur une nacelle 13, elle-même destinée à être fixée au fuselage d'un avion. Chaque rotor 11, 12 comprend un disque de rotor 140 (ou moyeu) auquel est rattaché un carter externe 14, monté rotatif par rapport à la nacelle 13 et une pluralité d'aubes 15 fixées sur le disque.

Le disque 140 est représenté en pointillés sur la figure 4A car le carter externe 14 le cache mais il est mieux visible sur la figure 4B, sur laquelle le carter 14 n'est pas représenté.

Dans la présente demande, l'amont et l'aval sont définis par rapport au sens d'écoulement normal du gaz dans le rotor 11, 12. Par ailleurs, on appelle axe X du rotor, son axe de rotation. La direction « axiale » correspond à la direction de l'axe X et une direction « radiale » est une direction perpendiculaire à cet axe et passant par lui. Par ailleurs, la direction « circonférentielle » correspond à une direction perpendiculaire à l'axe X et ne passant par lui. Sauf précision contraire, interne et externe, respectivement, sont utilisés en référence à une direction radiale de sorte que la partie ou la face interne d'un élément est plus proche de l'axe X que la partie ou la face externe du même élément.

De plus, le rotor 11, 12 comprend pour chaque aube 15, une attache 16. Chaque attache 16 est montée rotative, par rapport au disque de rotor 140, autour d'un axe de calage radial Y. Plus précisément, l'attache 16 est montée rotative à l'intérieur d'un logement ménagé dans le disque de rotor, par l'intermédiaire de billes ou d'autres éléments roulants. L'attache 16 est également connue sous le nom de « pivot » dans la littérature. On peut se reporter au sujet de ce montage pivotant au document FR 2 943 312.

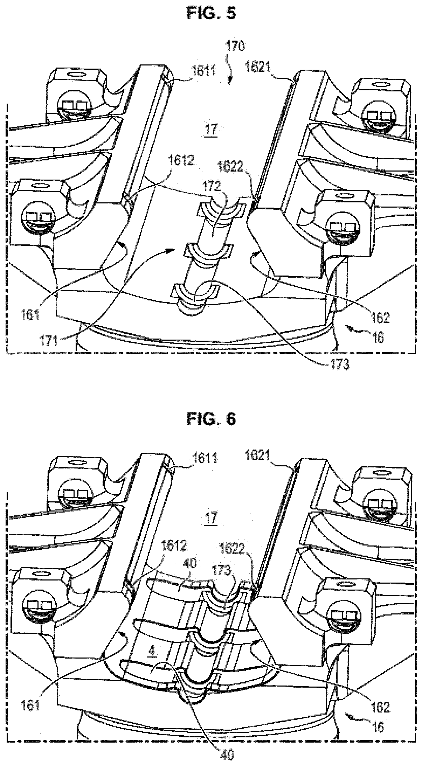

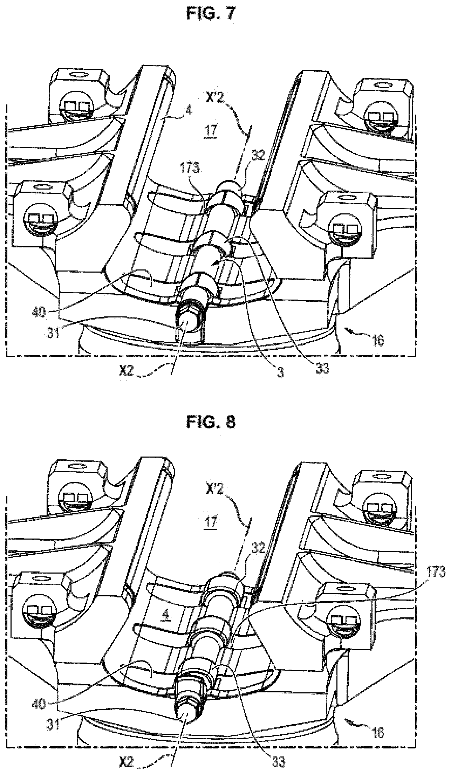

Comme cela apparaît mieux sur la figure 5, chaque attache 16 comprend une alvéole 17 pour recevoir un pied 150 d'aube 15, ce pied présentant par exemple une forme en queue d'aronde. Il est mieux visible sur les figures 7 à13 notamment.

L'attache 16 comprend deux flancs 161 et 162, qui définissent entre eux l'ouverture radiale supérieure 170 de l'alvéole 17, opposée au fond 171 de l'alvéole. Les deux flancs 161 et 162 sont inclinés l'un vers l'autre et forment des portées.

Chaque flanc 161, 162 est muni d'une rainure aval 1611, respectivement 1621 et d'une rainure amont 1612, respectivement 1622. Les deux rainures aval 1611, 1621, situées à l'extrémité aval de l'alvéole 17 se font face et sont disposées en V. Il en est de même pour les deux rainures amont 1612 et 1622 (voir figure 5).

L'alvéole 17 s'étend dans une direction axiale entre un accès du côté du bord d'attaque de l'aube et un accès du côté du bord de fuite de l'aube. C'est par l'un de ces deux accès opposés qu'un pied d'aube peut être engagé dans l'alvéole 17, par coulissement.

L'invention sera mieux comprise en explicitant plus en détail la relation qui existe entre les différents efforts qui agissent sur une aube à attache pivotante. D'une part, l'effort centrifuge s'exerçant sur l'aube 15 est orienté selon la direction radiale et sa valeur est proportionnelle au carré de la vitesse de rotation du rotor. Cet effort dépend donc fortement du régime moteur. D'autre part, l'effort centrifuge plaque le pied d'aube 150 sur les portées 161, 162 de l'alvéole 17, qui assurent sa rétention. En d'autres termes, chaque portée de l'alvéole génère un effort de réaction sur le pied d'aube 150 qui est dirigé selon la normale à la surface de contact et la résultante de ces efforts s'oppose à l'effort centrifuge. On en déduit que la valeur des efforts de réaction au niveau des portées 161, 162 est directement liée à l'effort centrifuge. Or, ces efforts de réaction jouent également un autre rôle très important puisqu'ils s'opposent au moment des efforts aérodynamiques qui provoque le rotulage de l'aube 15. Par conséquent, dans le cas d'un démarrage en drapeau, caractérisé par un régime moteur réduit et un écoulement aérodynamique turbulent, l'effort centrifuge faible induit des efforts de réaction au niveau des portées 161, 162, qui sont insuffisants pour s'opposer au moment des efforts aérodynamiques intenses ce qui provoque le rotulage de l'aube 15.

L'invention consiste à compenser le faible niveau d'effort centrifuge, par l'application d'une précharge importante sous le pied d'aube 150. Pour ce faire, on installe entre le pied d'aube 150 et le fond 171 de l'alvéole, une cale 2 et une tige de précontrainte 3 à au moins une came.

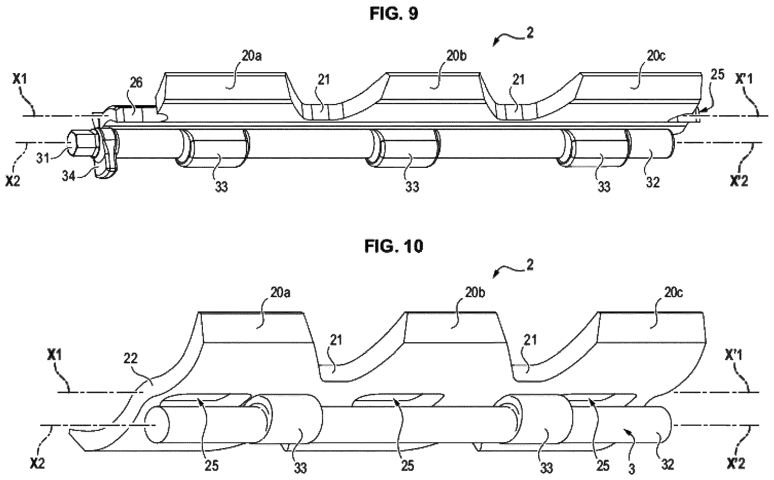

La cale 2 va maintenant être décrite en faisant référence aux figures 9 à 13.

Cette cale 2 présente une forme générale allongée. Elle présente un profil rectiligne selon sa direction longitudinale schématisée par l'axe X1-X'1 en figures 9 et 10.

La cale 2 est constituée d'un seul bloc de matériau élastiquement déformable. Ce matériau peut par exemple être de l'aluminium. Toutefois, de façon avantageuse, ce matériau est un matériau composite tissé 3D (en trois dimensions), par exemple de type « tissage interlock ». Par « tissage interlock », on entend ici une armure de tissage 3D dont chaque couche de fils de chaîne lie plusieurs couches de fils de trame avec tous les fils d'une même colonne de chaîne ayant le même mouvement dans le plan de l'armure.

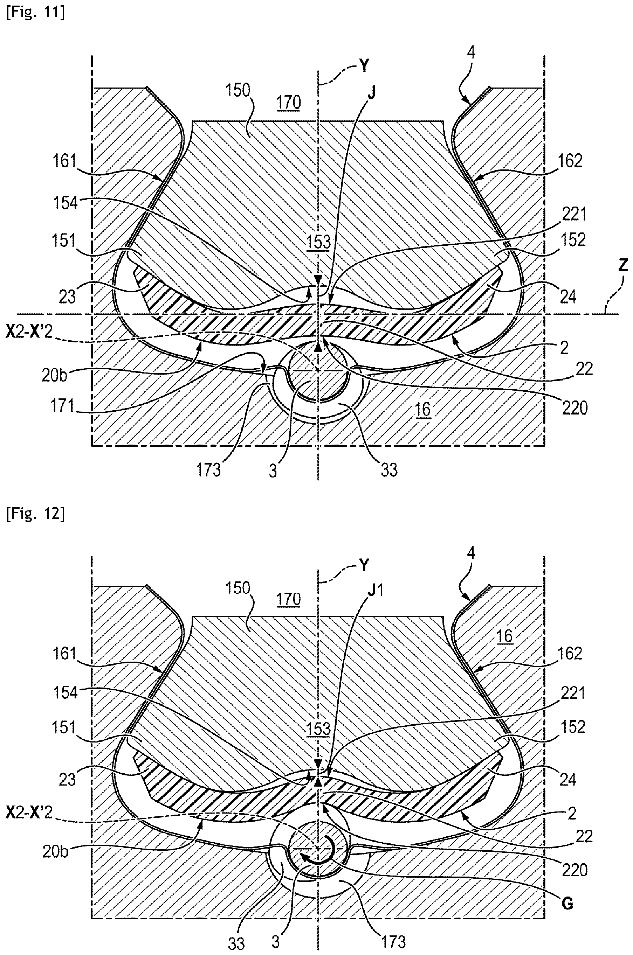

De préférence également, ce matériau est anisotrope et sa raideur dans la direction de brochage, c'est-à-dire selon l'axe X1-X'1, est plus importante que la raideur dans la direction qui transmet les efforts des cames vers le pied de l'aube (direction circonférentielle Z - voir figure 11).

La cale 2 comprend au moins un tronçon longitudinal. Dans l'exemple de réalisation représentée sur les figures 9 et 10, cette cale 2 comprend trois tronçons longitudinaux 20a, 20b, 20c (leur nombre pourrait être différent), réunis par des jonctions 21 plus étroites, du même matériau, l'ensemble formant une seule pièce.

Comme cela apparaît mieux sur la figure 11, chaque tronçon longitudinal 20a, 20b, 20c a un profil transversal en forme d'arc dont la zone centrale 22 est incurvée, de sorte qu'elle présente une partie bombée 221, saillante en direction de la concavité dudit arc et qu'elle présente un creux 220 en direction de la convexité de l'arc. Les deux zones latérales 23, 24 de la cale sont situées aux deux extrémités de l'arc.

La cale 2 est disposée dans chaque alvéole 17, de façon à être intercalée entre le pied d'aube 150 et la tige de précontrainte 3 et de façon que ses deux zones latérales 23, 24 soient en contact avec des zones latérales 151, 152 correspondantes du pied d'aube 150, tout en étant éloignées du fond 171 de l'alvéole 17 et que sa zone centrale 22 soit en regard de la zone centrale 153 dudit pied d'aube 150.

La cale 2 présente une extrémité aval 25 et une extrémité amont 26 (voir figure 9).

La tige de précontrainte 3 à au moins une came va maintenant être décrite en faisant référence aux figures 7 à 11.

La tige 3 est cylindrique et présente deux extrémités, respectivement amont 31 et aval 32. Elle présente un axe longitudinal X2-X'2. Elle comprend au moins une came 33, de préférence monobloc avec le reste de la tige. Cette came 33 est saillante sur une partie de la circonférence de la tige. La tige 3 peut comprendre plus d'une came 33, par exemple deux (voir figure 10) ou trois (voir figures 7 à 9), réparties sur sa longueur, voire plus de trois.

De préférence, la tige de précontrainte 3 est réalisée en acier ou dans un alliage de titane.

De façon avantageuse, le fond 171 de l'alvéole est aménagé et présente une gorge longitudinale 172, (de préférence usinée, voir figure 5) pour accueillir la tige 3. Cette gorge 172 possède autant de cavités d'escamotage 173 que la tige 3 comprend de cames 33, chaque cavité d'escamotage 173 étant destinée à recevoir une came 33.

Cette gorge 172 est destinée à guider et à soutenir la tige 3 dans ses zones sans came. Elle joue le rôle de demi-palier inférieur lorsque la tige 3 est dans la gorge.

Une fois placée dans la gorge, la tige 3 peut être manipulée en rotation de façon à la faire pivoter autour de son axe longitudinal X2-X'2, à l'aide d'un outil. A cet effet, l'une de ses extrémités, de préférence l'extrémité amont 31, présente avantageusement des pans coupés facilitant sa préhension (voir figure 9).

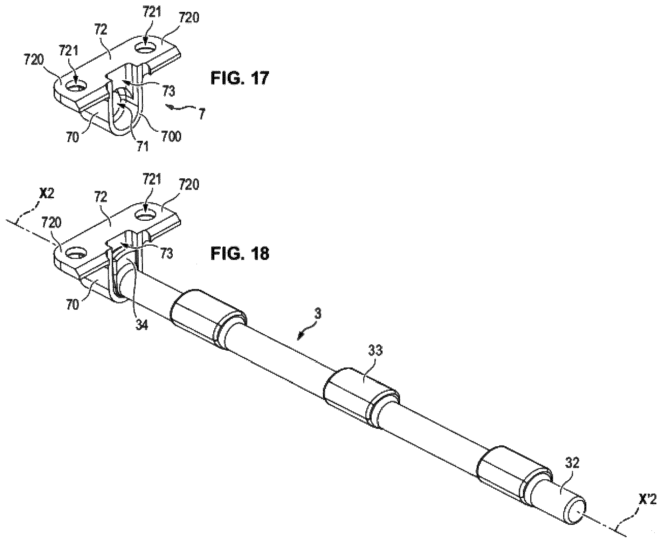

De façon avantageuse, la tige de précontrainte 3 peut comprendre un détrompeur 34, disposé de préférence à proximité de l'extrémité amont 31 (voir par exemple les figures 9 et 18). Sur la figure 10, la coupe est telle que ce détrompeur n'est pas visible.

Le détrompeur 34 s'étend radialement par rapport à l'axe longitudinal X2-X'2 de la tige 3 et il est orienté de façon à être saillant de même côté de la tige 3 que les cames 33 le sont.

Ainsi, lorsque le détrompeur 34 s'étend vers le bas sur la figure 9 (c'est-à-dire dans la direction radiale interne vers le centre du disque de rotor 140), la tige 3 est en position dit « de repos » et lorsque le détrompeur s'étend vers le haut sur la figure 18 (c'est-à-dire dans la direction radiale externe vers l'extérieur du disque rotor 140), la tige 3 est en position dite « armée ».

Selon une variante de réalisation représentée schématiquement sur la figure 10, des trous oblongs 25 sont ménagés dans les zones centrales 22 d'au moins certains tronçons 20a, 20b, 20c, afin d'améliorer encore la souplesse et la déformabilité des différentes parties de la cale 2. Ces trous oblongs 25 permettent également d'alléger la cale. Ils sont positionnés aux endroits qui ne sont pas en contact avec les cames 33 de la tige de précontrainte 3.

De façon avantageuse, et comme cela apparaît mieux sur la figure 6, un clinquant métallique 4 est posé dans le fond de l'alvéole 17, afin de la protéger des frottements avec la tige 3. Ce clinquant 4 remonte également jusqu'aux portées 161, 162 de l'alvéole afin de protéger l'attache 16 des frottements avec le pied d'aube 150. Le clinquant 4 est de préférence ajouré autour des cavités d'escamotage 173 qui ne sont pas sujettes aux frottements, (voir les jours référencés 40) et autour des rainures 1611, 1621, 1612, 1622.

Le clinquant 4 est de préférence en inox et fait de préférence quelques dixièmes de millimètres d'épaisseur.

D'autres éléments de protection peuvent également être présents pour protéger les pièces en matériau composite. Des tissus imprégnés, (ou bandes d'usure), spécialement conçus pour résister aux frottements, (connus en anglais sous le nom de « *wearstrips* ») peuvent par exemple être installés sur les portées du pied d'aube 150, dans les zones en contact avec l'alvéole et sur la cale 2 dans les zones en contact avec les cames 33 ou le pied d'aube 150.

Comme on peut le voir sur les figures 11 à 13, la forme de la section transversale de la base du pied d'aube 150 présente un évidement central 154 (forme en tête d'os) afin de s'adapter de manière optimale à la présence de la cale 2 et de la tige 3 de précontrainte à cames. Cette forme particulière permet de dégager de l'espace pour intégrer la cale et la tige sous le pied d'aube, en limitant le creusement de l'alvéole 17. Cependant, ce n'est pas la seule fonction de cette forme en tête d'os qui sert également de butée pour la came 2, par coopération de forme, en cas de rotulage non maîtrisé de l'aube 15 (ingestion d'oiseau par exemple), comme cela sera expliqué ultérieurement.

Le maintien axial du pied d'aube 150, de la cale 2 et de la tige 3 sont assurés par un verrou aval de rétention axiale 5, un verrou amont de rétention axiale 6 et le verrouillage de la tige 3 dans sa position armée est assuré par un verrou de tige 7.Ces trois verrous sont de préférence en métal.

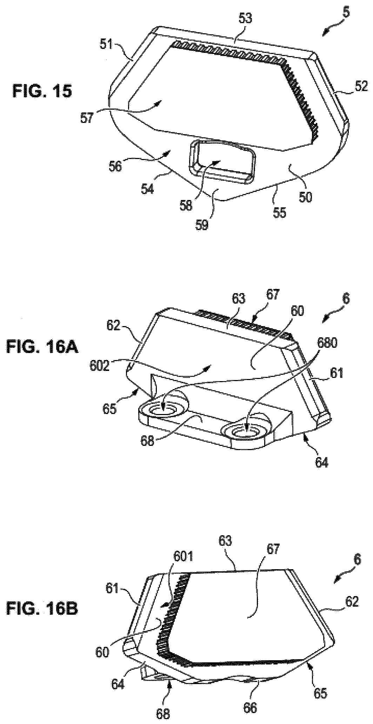

Un exemple de réalisation du verrou aval de rétention axiale 5 est représenté sur la figure 15.

Ce verrou 5 comprend une plaque 50 de forme pentagonale avec deux bords latéraux 51, 52, dit « de verrouillage », joints par un bord radialement externe 53 et deux bords radialement interne 54, 55. La plaque 50 présente une face intérieure 56 sur laquelle est disposée une pièce d'amortissement en nid d'abeille 57. Enfin, la plaque 50 est percée d'un orifice 58 disposé entre les deux bords 54, 55 plus bas que le nid d'abeille 57.

La plaque 50 est dimensionnée de façon que ses deux bords latéraux 51, 52 puissent être insérés respectivement dans les rainures aval 1611 et 1621 de l'attache 16, et ce, selon une direction radiale, de l'intérieur vers l'extérieur, c'est-à-dire de bas en haut sur les figures 5 à 8.

La pointe du verrou 5 située entre ses deux bords 54, 55, plus bas que l'orifice 58, est référencée 59.

Un exemple de réalisation du verrou amont de rétention axiale 6 est représenté sur les figures 16A et 16B. Ce verrou 6 comprend une plaque 60 de forme hexagonale avec deux bords latéraux 61, 62, dits « de verrouillage », joints par un bord radialement externe 63, et deux bords latéraux internes 64, 65 inclinés en direction l'un de l'autre et joints par un bord radialement interne 66, opposé au bord 63. La plaque 60 présente une face intérieure 601, sur laquelle est disposée une pièce d'amortissement en nid d'abeille 67 et une face extérieure opposée 602, qui se prolonge vers l'extérieur par une aile perpendiculaire 68, percée d'au moins un orifice 680, ici de deux.

La plaque 60 est dimensionnée de façon que ses deux bords latéraux de verrouillage 61, 62 inclinés en V, puissent être insérés respectivement dans les rainures amont 1612, 1622 de l'attache 16, et ce, selon une direction radiale, de l'intérieur vers l'extérieur, c'est-à-dire de bas en haut sur les figures 5 à 8. Dans cette position, le nid d'abeille 67 est en butée contre le pied d'aube 150 et le verrou 6 bloque axialement ce pied.

Le verrou de tige 7 va maintenant être décrit en liaison avec les figures 17 et 18. Ce verrou 7 présente la forme générale d'un pontet. Il comprend une partie en U 70 délimitant une ouverture traversante 71 dans la partie inférieure du U. Cette partie en U est obturée à sa partie supérieure par une plaque 72 qui dépasse de part et d'autre du U de façon à ménager deux ailes 720. Chaque aile 720 est percée d'un orifice 721.

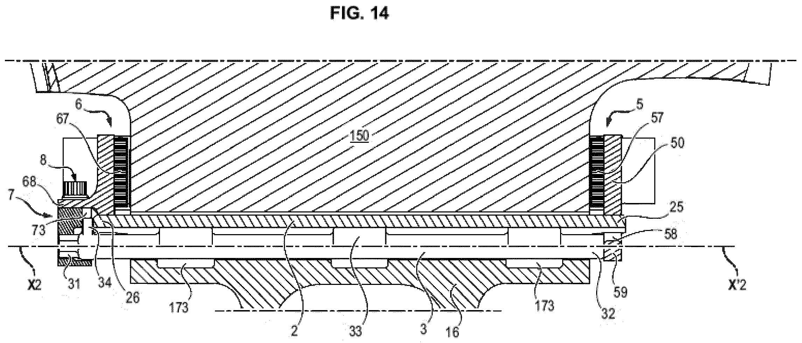

Une encoche 73 est ménagée dans la partie centrale de la plaque 72, au niveau de sa jonction avec la face intérieure 700 de la partie en U 70, c'est-à-dire la face destinée à être tournée vers l'alvéole 17 lorsque le verrou de la tige 7 est en place (voir figure 14).

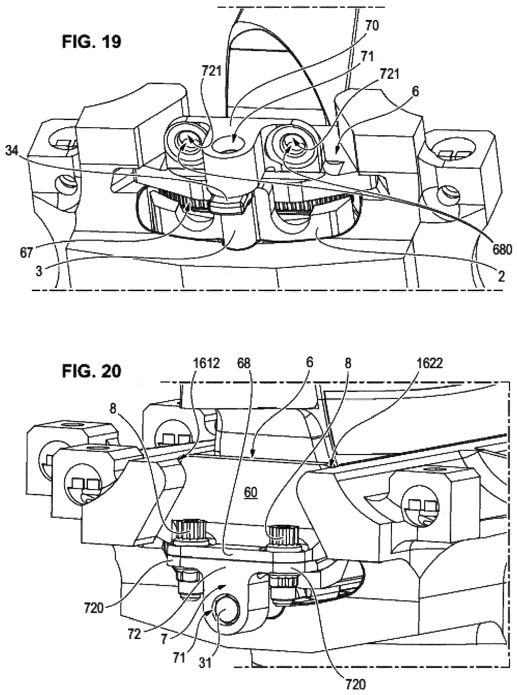

Sur les figures 14 et 20, on peut voir que l'ouverture 71 est configurée pour recevoir l'extrémité amont 31 de la tige 3 de sorte que la périphérie de cette extrémité (et par exemple ses pans coupés) ne soit plus accessible et ne puisse pas être manipulée en rotation.

Sur les figures 14 et 18, on peut voir que l'encoche 73 est configurée pour recevoir le détrompeur radial 34 lorsque la tige de précontrainte 3 est en position armée, c'est-à-dire que les cames 33 appuient contre la cale 2.

Le verrou de la tige 7 peut être assemblé avec le verrou de rétention amont 6 en appliquant la plaque 72 contre l'aile 68, en alignant les orifices 721 avec les orifices 680 et en insérant dans ces orifices des organes d'assemblage 8, tels que des vis et écrous, (voir figure 20).

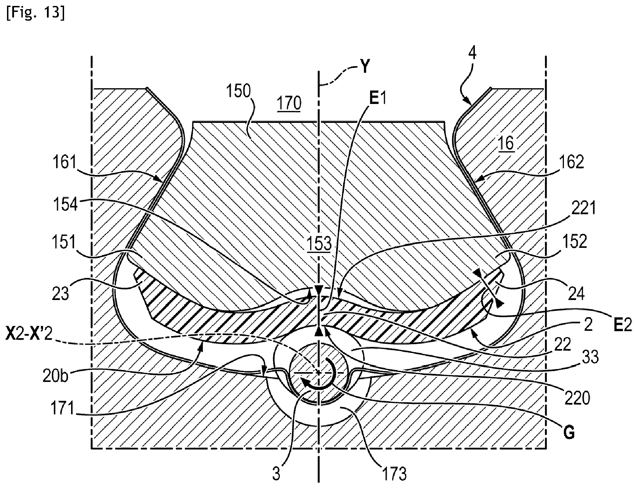

La séquence de montage du pied d'aube 150 dans l'alvéole 17 de l'attache 16 suit successivement les étapes suivantes :
- Installation du clinquant métallique 4 dans le fond 171 de l'alvéole 17 de l'attache pivotante 16,
- Installation de la tige de précontrainte 3 dans le fond de l'alvéole 17 dans sa position de repos, avec les cames 33 logées dans les cavités d'escamotage 173, (voir figure 7),
- Installation du verrou de rétention aval 5 dans les fentes de guidage aval 1611, 1621, l'extrémité 32 de la tige 3 venant en butée contre la pointe 59 du verrou 5 (voir figure 10),
- Insertion du pied de l'aube 150 à l'intérieur de l'alvéole 17 de l'attache 16, par coulissement jusqu'à ce qu'il soit en butée sur le nid d'abeille 57 du verrou de rétention aval 5,
- Installation du verrou de rétention amont 6 dans les fentes de guidage amont 1612, 1622, le nid d'abeille 67 venant en butée contre le pied d'aube 150,
- Introduction de la cale 2 entre le pied d'aube 150 et la tige de précontrainte 3, l'extrémité aval 25 de la cale 2 pénétrant dans l'orifice 58 du verrou de rétention aval 5 (voir figure 14). On se retrouve alors dans la situation représentée sur la figure 11. Le montage de la cale 2 s'effectue sans effort car un jeu J (voir figure 11) existe entre la face de la tige 3 ne présentant pas de came 33 et le fond de l'évidement 154 du pied de l'aube 150 et que la cale 2 est rectiligne selon son axe longitudinal X1-X'1.
- Application d'un couple (flèche G, figure 12) sur l'extrémité amont 31 de la tige de précontrainte 3 avec un outil pour réaliser une rotation de 180° et ainsi enclencher les cames 33 dans le creux 220 de la zone centrale 22 de la cale 2. Au cours de cette rotation, la géométrie des cames 33 génère un point dur ressenti par l'opérateur, pendant lequel la cale 2 est légèrement sur-contrainte (voir figure 12), sans jamais entrer en contact avec l'évidement central 154 du pied d'aube 150. Il existe un jeu J1 entre le fond l'évidement 154 et la partie bombée 221 (voir figure 12) qui est adapté pour permettre cette déformation transitoire de la cale 2. Une fois ce point dur passé, la suite de la rotation amène la tige 3 dans une nouvelle position d'équilibre (position armée) représentée sur la figure 13. La valeur du jeu J1 varie en fonction de l'orientation de la came 33. La géométrie des cames 33 est symétrique, et présente un point dur de part et d'autre de cette position d'équilibre armée, empêchant que le système puisse se désarmer seul, dans un sens ou dans l'autre, sans l'effort fourni par l'opérateur. Dans la position de la figure 13, les cames 33 sont en appui sur la cale 2 et induisent sa déformation. A titre de comparaison, sur les figures 12 et 13, la ligne en pointillés située sous la came 2 montre la forme de celle-ci lorsqu'elle n'est pas armée.
- Installation du verrou de tige7 et boulonnage sur le verrou de rétention amont à l'aide des boulons 8 (voir figures 14 et 20).

Un autre avantage du verrou de tige 7 réside dans le fait que l'encoche 73 et la partie en U 70 entourent le détrompeur de la tige de précontrainte, empêchant son montage si la tige de précontrainte 3 n'est pas armée. Comme on peut le voir sur la figure 19, lorsque le détrompeur 34 est orientée vers le bas (tige 3 au repos), la partie en U 70 butte contre lui, les orifices 721 ne peuvent pas être alignés avec les orifices 680 et l'assemblage est impossible. Ceci permet d'empêcher le montage de l'aube sans précharge du pied 150.

Lorsque l'ensemble des pièces est monté et armé :
- le verrou de rétention aval 5 sert de butée aval à la tige de précontrainte 3 et à la cale 2,
- la cale 2, armée par la tige de précontrainte 3, repousse les verrous de rétention amont 6 et aval 5 dans leurs gorges en V respectives de l'attache 16,
- le détrompeur 34 de la tige de précontrainte 3 sert de butée amont à la cale 2,
- le verrou de tige 7 sert de butée amont à la tige de précontrainte 3, verrouille l'armement de la tige 3, et empêche l'accès à la commande de rotation de la tige de précontrainte 3.

Le démontage de l'aube s'effectue aisément en réalisant ces étapes dans l'ordre inverse.

Lorsque le système est armé, la fonction de la tige à cames 3 est d'imposer un déplacement radial vers l'extérieur au centre 22 de la cale 2 dont les extrémités 23, 24 sont en appui sur le pied d'aube 150. La cale 2 se comporte alors comme un ressort puisque l'effort radial résultant dépend de sa raideur structurale. Par analogie, on peut également voir la cale 2, dans sa section transversale, comme une poutre en flexion trois points. L'effort central exercé par les cames 33 sur la cale 2 est égal à la somme des efforts exercés par les extrémités 23, 24 de la cale sur le pied d'aube 150. L'effort transmis au pied d'aube dépend de la flèche au centre de la cale 2, soit le déplacement radial vers l'extérieur, imposé par la came 33 lorsque le système est armé. En suivant la même analogie, on considère que les contraintes internes à la cale 2 sont maximales au centre de celle-ci et en surface. Par conséquent, un avantage de ce système est la possibilité d'ajuster l'effort de précharge sur le pied d'aube 150 en agissant au choix sur la géométrie de la came 33, la géométrie de la cale 2 ou le matériau de la cale 2.

Toutefois, la cale 2 doit résister aux contraintes internes dues à sa flexion. Il est donc préférable qu'elle présente une épaisseur minimale, en particulier en son centre, mais sans être trop raide non plus. Ainsi, de façon avantageuse et pour satisfaire ce compromis, l'épaisseur de la cale 2 est dégressive du centre (épaisseur E1 sur la figure 13) vers les extrémités (épaisseur E2), avec E1 supérieur à E2.

Ensuite, il est important de ne pas perdre la précharge de montage à cause de l'effort centrifuge qui va déplacer radialement vers l'extérieur le pied d'aube (vers le haut sur les figures 11 à 13) et par conséquent relâcher le niveau de déformation de la cale 2. Cela implique que le déplacement radial vers l'extérieur imposé par les cames 33 soit grand par rapport au déplacement radial vers l'extérieur du pied d'aube 150 en régime de démarrage. Pour atteindre l'effort de précharge ciblé, il est donc préférable de diminuer la raideur de la cale 2, par exemple en diminuant son épaisseur E1, et d'augmenter le déplacement imposé par les cames 33, en augmentant les dimensions de celles-ci.

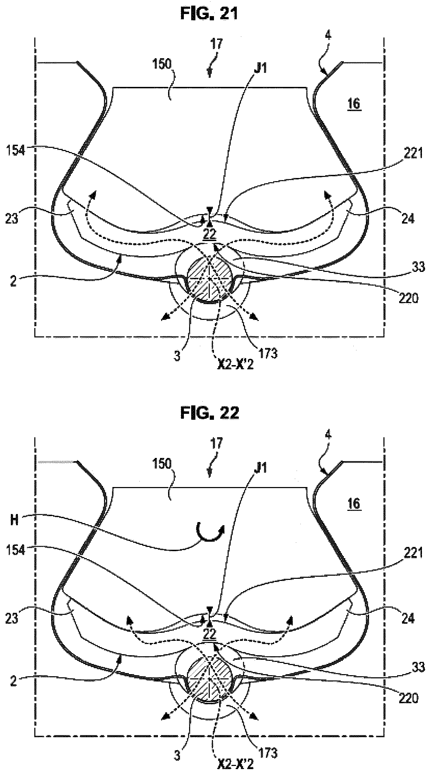

Sur la figure 21, les flèches en pointillés représentent les chemins d'effort lorsque la tige de précontrainte 3 est en position armée et que le rotor est en fonctionnement normal. Les efforts transitent du centre 22 de la cale 2 vers ses extrémités 23, 24 en contact avec le pied d'aube. Le jeu fonctionnel J1 entre la partie bombée 221 de la cale 22 et l'évidement 154 du pied d'aube 150 permet à la cale 2 de jouer son rôle de ressort. Cela permet de conserver la précharge lorsque l'aube 15 se déplace sous l'effet d'un effort centrifuge.

La figure 22 représente la situation lorsque la tige de précontrainte 3 est armée mais que la précharge devient insuffisante pour contrer le rotulage du pied d'aube 150 à cause d'un effort aérodynamique trop important ou d'une ingestion d'oiseau dans les aubes du rotor par exemple. Dans ce cas, non seulement le pied d'aube 150 rotule (flèche H) mais il descend dans l'alvéole 17. Les surfaces en contact entre la cale 2 et le pied d'aube 150 se rapprochent des surfaces de contact entre la cale 2 et les cames 33. Les chemins d'effort (en pointillés) se raccourcissent et c'est directement la compression de la cale 2 dans son épaisseur qui s'oppose au rotulage de l'aube. La cale 2 agit comme une butée. La valeur du jeu J1 diminue.

Enfin, on notera que les différents tronçons 20a, 20b, 20c de la cale 2 réagissent séparément au mouvement de l'aube 15, ce qui permet d'accompagner au mieux le déplacement du chacune des parties du pied d'aube 150.

A remarquer que le jeu J1, présent entre l'évidement 154 du pied d'aube 150 et la partie bombée 221 de la zone centrale 22 de la cale 2 située en regard, est plus important en position de repos de la tige 3 que lorsque la tige est en position armée.

Dans la description qui précède, les aubes 15 sont en matériau composite tissé 3D sur le principe général d'aubes connues en composite présentant une préforme tissée imprégnée d'une résine, dont le pied est cependant adapté conformément aux aménagements de pied décrits dans les passages correspondants de la description qui précède.

## Revendications

1. Rotor de soufflante (11, 12) muni d'aubes (15), ce rotor comprenant un disque de rotor (140) muni à sa périphérie d'une pluralité d'attaches (16), chaque attache (16) comprenant une alvéole (17) de réception du pied (150) de l'une desdites aubes (15), chaque alvéole (17) comprenant un fond (171) et une cale (2) allongée étant disposée dans chaque alvéole (17), ladite cale (2) étant réalisée en un matériau élastiquement déformable, au moins un tronçon longitudinal (20a, 20b, 20c) de cette cale (2) ayant un profil transversal en forme d'arc dont la zone centrale (22) est incurvée, de sorte qu'elle comprend une partie bombée (221) saillante en direction de la concavité dudit arc et un creux (220) en direction de la convexité de l'arc , et ladite cale (2) étant disposée dans l'alvéole (17) de façon que sa partie bombée (221) soit en regard du pied d'aube (150) et que son creux (220) soit orienté vers le fond (171) de l'alvéole, **caractérisé en ce que** les aubes (15) sont à calage variable, **en ce que** chaque attache (16) est montée rotative par rapport audit disque de rotor autour d'un axe radial de calage (Y), **en ce que** la partie centrale (153) du pied d'aube (150) présente un évidement(154), **en ce que** ledit pied d'aube (150) est disposé dans l'alvéole (17) de façon que son évidement (154) soit orienté vers le fond (171) de l'alvéole (17), **en ce qu'**une tige de précontrainte (3) à au moins une came (33) est également disposée dans chaque alvéole (17), **en ce que** ladite cale (2) est disposée dans l'alvéole (17) de façon que sa partie bombée (221) soit en regard de l'évidement (154) du pied d'aube (150) **en ce que** le fond (171) de ladite alvéole (17) comprend autant de cavités d'escamotage (173) que la tige (3) comprend de cames (33), **en ce que** ladite tige de précontrainte (3) est intercalée entre le creux (220) de la zone centrale (22) de ladite cale (2) et le fond (171) de l'alvéole (17), de façon que ladite came (33) soit en regard de la cavité d'escamotage (173) correspondante et **en ce que** ladite tige de précontrainte (3) est mobile en rotation autour de son axe longitudinal (X2-X'2), de sorte que ladite tige de précontrainte (3) peut être déplacée entre une position de repos, dans laquelle la came (33) est logée dans la cavité d'escamotage (173), et une position armée, dans laquelle la came (33) exerce une pression radiale sur la zone centrale (22) de la cale (2) de façon à déplacer ladite cale (2) en direction du pied d'aube (150) et de façon que les deux zones latérales (23, 24) de ladite cale, situées de part et d'autre de sa zone centrale (22), soient en contact avec des zones latérales correspondantes (151, 152) du pied d'aube (150) et soient éloignées du fond (171) de l'alvéole (17).

2. Rotor de soufflante selon la revendication 1, **caractérisé en ce qu'**il existe un jeu fonctionnel (J1) entre l'évidement (154) du pied d'aube (150) et la partie bombée (221) de la zone centrale (22) de la cale (2) située en regard, le jeu (J1) étant plus important en position de repos de la tige que lorsque la tige est en position armée.

3. Rotor de soufflante selon la revendication 1 ou 2, **caractérisé en ce que** le fond (171) de l'alvéole (17) est muni d'une gorge longitudinale (172) destinée à recevoir et à guider la tige de précontrainte (3) et **en ce que** lesdites cavités d'escamotage (173) sont ménagées dans cette gorge (172).

4. Rotor de soufflante selon l'une quelconque des revendications précédentes, **caractérisé en ce que** la cale (2) présente une épaisseur (E1) plus importante dans sa zone centrale (22) que l'épaisseur (E2) de ses extrémités (23, 24).

5. Rotor de soufflante selon l'une quelconque des revendications précédentes, **caractérisé en ce que** ladite cale (2) est constituée de plusieurs tronçons (20a, 20b, 20c)) réunis par des jonctions (21) plus étroites.

6. Rotor de soufflante selon l'une quelconque des revendications précédentes, **caractérisé en ce qu'**un clinquant (4) est disposé dans le fond de l'alvéole (17) de l'attache (16).

7. Rotor de soufflante selon l'une quelconque des revendications précédentes, **caractérisé en ce que** l'une des extrémités de la tige de précontrainte (3), de préférence son extrémité amont (31), présente une forme, telle que des pans coupés, qui permet sa préhension et son entraînement en rotation autour de son axe longitudinal (X2-X'2) par un outil.

8. Rotor de soufflante selon l'une des revendications précédentes, **caractérisé en ce que** la tige de précontrainte (3) présente à proximité de l'une de ses extrémités, de préférence son extrémité amont (31), un détrompeur (34) qui s'étend radialement par rapport à l'axe longitudinal (X2-X'2) de ladite tige (3) et qui est saillant du même côté de la tige (3) que les cames (33) sont saillantes.

9. Rotor de soufflante selon la revendication 8, **caractérisé en ce qu'**un verrou amont de rétention axiale (6) du pied d'aube (150), formé d'une plaque (60), est inséré dans deux fentes amont (1612, 1622) ménagées à l'extrémité amont des flancs (161, 162) de ladite alvéole (17) de réception du pied d'aube (150), ces deux fentes amont (1612, 1622) étant disposées en V, et **en ce qu'**un verrou de tige (7) est fixé sur ledit verrou amont de rétention axiale (16), ce verrou de tige (7) étant muni d'une ouverture (71) de réception de l'une des extrémités de la tige de précontrainte (3), de préférence son extrémité amont (31), et d'une encoche (73) de réception du détrompeur (34) de ladite tige (3), de façon à bloquer ladite tige de précontrainte (3) en position armée.

10. Rotor de soufflante selon l'une quelconque des revendications précédentes, **caractérisé en ce qu'**un verrou aval de rétention axiale (5) du pied d'aube (150), formé d'une plaque (50) est inséré dans deux fentes aval (1611, 1621) ménagées à l'extrémité aval des flancs (161, 162) de ladite alvéole (17) de réception du pied d'aube (150), ces deux fentes aval (1611, 1621) étant disposées en V, **en ce que** ce verrou aval (5) est percé d'un orifice (58) de réception de l'extrémité aval (25) de ladite cale (2) et **en ce que** ce verrou de rétention aval (50) présente sur sa face intérieure (56) une surface (59) formant butée axiale pour l'extrémité aval (32) de ladite tige de contrainte (3).

11. Rotor de soufflante selon l'une des revendications précédentes, **caractérisé en ce que** ladite cale (2) est réalisée en un matériau composite tissé 3D.

12. Rotor de soufflante selon l'une des revendications précédentes, **caractérisé en ce que** les aubes (15) sont en matériau composite tissé 3D.

13. Turbomachine, **caractérisée en ce qu'**elle comporte un rotor (11, 12) de soufflante muni d'aubes à calage variable selon l'une des revendications 1 à 12.

## Patentansprüche

1. Gebläserotor (11, 12), der mit Schaufeln (15) ausgestattet ist, wobei dieser Rotor eine Rotorscheibe (140) umfasst, die an ihrem Umfang mit einer Vielzahl von Befestigungen (16) ausgestattet ist, wobei jede Befestigung (16) eine Wabe (17) zur Aufnahme des Fußes (150) einer der Schaufeln (15) umfasst, wobei jede Wabe (17) einen Boden (171) umfasst und ein länglicher Keil (2) in jeder Wabe (17) angeordnet ist, wobei der Keil (2) aus einem elastisch verformbaren Material hergestellt ist, wobei mindestens ein länglicher Abschnitt (20a, 20b, 20c) dieses Keils (2) ein transversales Profil in Bogenform hat, dessen zentraler Bereich (22) derart gekrümmt ist, dass er einen in Richtung der Konkavität des Bogens hervorstehenden bauchigen Teil (221) und eine Höhlung (220) in Richtung der Konvexität des Bogens umfasst, und der Keil (2) in der Wabe (17) derart angeordnet ist, dass sein bauchiger Teil (221) dem Schaufelfuß (150) zugewandt ist und dass seine Höhlung (220) zum Boden (171) der Wabe ausgerichtet ist, **dadurch gekennzeichnet, dass** die Schaufeln (15) mit variablem Anstellwinkel sind, dass jede Befestigung (16) im Verhältnis zur Rotorscheibe um eine radiale Anstellwinkelachse (Y) rotatorisch angebracht ist, dass der zentrale Teil (153) des Schaufelfußes (150) eine Aussparung (154) aufweist, dass der Schaufelfuß (150) in der Wabe (17) derart angeordnet ist, dass seine Aussparung (154) zum Boden (171) der Wabe (17) ausgerichtet ist, dass ein Vorspannungsstab (3) an mindestens einer Kurvenscheibe (33) ebenfalls in jeder Wabe (17) angeordnet ist, dass der Keil (2) derart in der Wabe (17) angeordnet ist, dass sein bauchiger Teil (221) der Aussparung (154) des Schaufelfußes (150) zugewandt ist, dass der Boden (171) der Wabe (17) ebenso viele Versenkhohlräume (173) umfasst wie der Stab (3) Kurvenscheiben (33) umfasst, dass der Vorspannungsstab (3) zwischen der Höhlung (220) dem zentralen Bereich (22) des Keils (2) und dem Boden (171) der Wabe (17) derart zwischengestellt ist, dass die Kurvenscheibe (33) dem entsprechenden Versenkhohlraum (173) zugewandt ist und dass der Vorspannungsstab (3) um seine Längsachse (X2-X'2) derart rotatorisch beweglich ist, dass der Vorspannungsstab (3) zwischen einer Ruhestellung, in welcher die Kurvenscheibe (33) im Versenkhohlraum (173) aufgenommen ist, und einer gespannten Stellung, in welcher die Kurvenscheibe (33) einen radialen Druck auf den zentralen Bereich (22) des Keils (2) ausübt, derart verlagerbar ist, dass der Keil (2) in Richtung des Schaufelfußes (150) verlagert wird und derart, dass die beiden seitlichen Bereiche (23, 24) des Keils, die sich beiderseits seines zentralen Bereichs (22) befinden, mit entsprechenden seitlichen Bereichen (151, 152) des Schaufelfußes (150) im Kontakt sind und vom Boden (171) der Wabe (17) entfernt sind.

2. Gebläserotor nach Anspruch 1, **dadurch gekennzeichnet, dass** es zwischen der Aussparung (154) des Schaufelfußes (150) und dem bauchigen Teil (221) des zentralen Bereichs (22) des Keils (2), der sich zugewandt befindet, ein Funktionsspiel (J1) gibt, wobei das Spiel (J1) in Ruhestellung des Stabs größer ist als wenn der Stab in gespannter Stellung ist.

3. Gebläserotor nach Anspruch 1 oder 2, **dadurch gekennzeichnet, dass** der Boden (171) der Wabe (17) mit einer länglichen Nut (172) ausgestattet ist, die zur Aufnahme und zur Führung des Vorspannungsstabs (3) bestimmt ist und dass die Versenkhohlräume (173) in dieser Nut (172) eingerichtet sind.

4. Gebläserotor nach einem der vorangehenden Ansprüche, **dadurch gekennzeichnet, dass** der Keil (2) eine größere Dicke (E1) in seinem zentralen Bereich (22) als die Dicke (E2) seiner Enden (23, 24) aufweist.

5. Gebläserotor nach einem der vorangehenden Ansprüche, **dadurch gekennzeichnet, dass** der Keil (2) aus mehreren Abschnitten (20a, 20b, 20c) besteht, die durch schmalere Verbindungen (21) vereint sind.

6. Gebläserotor nach einem der vorangehenden Ansprüche, **dadurch gekennzeichnet, dass** ein Metallblatt (4) im Boden der Wabe (17) der Befestigung (16) angeordnet ist.

7. Gebläserotor nach einem der vorangehenden Ansprüche, **dadurch gekennzeichnet, dass** eins der Enden des Vorspannungsstabs (3), vorzugsweise dessen stromaufwärtiges Ende (31), eine Form wie abgeschrägte Ecken aufweist, die sein Ergreifen und seinen rotatorischen Antrieb um seine Längsachse (X2-X'2) mit einem Werkzeug erlaubt.

8. Gebläserotor nach einem der vorangehenden Ansprüche, **dadurch gekennzeichnet, dass** der Vorspannungsstab (3) in der Nähe eines seiner Enden, vorzugsweise seines stromaufwärtigen Endes (31), eine Unverwechselbarkeitseinrichtung (34) aufweist, die sich radial im Verhältnis zur Längsachse (X2-X'2) des Stabs (3) erstreckt und die auf derselben Seite des Stabs (3) hervorsteht, wo die Kurvenscheiben (33) hervorstehen.

9. Gebläserotor nach Anspruch 8, **dadurch gekennzeichnet, dass** ein stromaufwärtiger Riegel zum axialen Halten (6) des Schaufelfußes (150), der von einer Platte (60) gebildet ist, in zwei stromaufwärtige Schlitze (1612, 1622) eingesetzt ist, die am stromaufwärtigen Ende der Flanken (161, 162) der Wabe (17) zur Aufnahme des Schaufelfußes (150) eingerichtet sind, wobei diese zwei stromaufwärtigen Schlitze (1612, 1622) in V-Form angeordnet sind, und dass ein Stabriegel (7) auf dem stromaufwärtigen Riegel zum axialen Halten (16) befestigt ist, wobei dieser Stabriegel (7) mit einer Öffnung (71) zur Aufnahme von einem der Enden des Vorspannungsstabs (3), vorzugsweise von seinem stromaufwärtigen Ende (31) ausgestattet ist, und einer Kerbe (73) zur Aufnahmen der Unverwechselbarkeitseinrichtung (34) des Stabs (3), so dass der Vorspannungsstab (3) in gespannter Stellung arretiert wird.

10. Gebläserotor nach einem der vorangehenden Ansprüche, **dadurch gekennzeichnet, dass** ein stromabwärtiger Riegel zum axialen Halten (5) des Schaufelfußes (150), der von einer Platte (50) gebildet ist, in zwei stromabwärtige Schlitze (1611, 1621) eingesetzt ist, die am stromabwärtigen Ende der Flanken (161, 162) der Wabe (17) zur Aufnahme des Schaufelfußes (150) eingerichtet sind, wobei diese zwei stromabwärtigen Schlitze (1611, 1621) in V-Form angeordnet sind, und dass dieser stromabwärtige Riegel (5) von einem Loch (58) zur Aufnahme des stromabwärtigen Endes (25) des Keils (2) durchbrochen ist und dass dieser stromabwärtige Halteriegel (50) auf seiner Innenseite (56) eine Fläche (59) aufweist, die einen axialen Anschlag für das stromabwärtige Ende (32) des Vorspannungsstabs (3) bildet.

11. Gebläserotor nach einem der vorangehenden Ansprüche, **dadurch gekennzeichnet, dass** der Keil (2) aus einem gewebten 3D-Verbundmaterial hergestellt ist.

12. Gebläserotor nach einem der vorangehenden Ansprüche, **dadurch gekennzeichnet, dass** die Schaufeln (15) aus gewebtem 3D-Verbundmaterial sind.

13. Turbomaschine, **dadurch gekennzeichnet, dass** sie einen Gebläserotor (11, 12) aufweist, der mit Schaufeln mit variablem Anstellwinkel nach einem der Ansprüche 1 bis 12 ausgestattet ist.

## Claims

1. A fan rotor (11, 12) provided with blades (15), this rotor comprising a rotor disc (140) provided at its periphery with a plurality of fasteners (16), each fastener (16) comprising a cell (17) for receiving the root (150) of one of said blades (15),each cell (17) comprising a bottom (171) and an elongated wedge (2) being arranged in each cell (17), said wedge (2) being made of an elastically deformable material, at least one longitudinal section (20a, 20b, 20c) of this wedge (2) having a transverse profile in the form of an arc, the central region (22) of which is curved, so that it comprises a domed portion (221) protruding in the direction of the concavity of said arc and a hollow (220) in the direction of the convexity of the arc, and said wedge (2) being arranged in the cell (17) so that its domed portion (221) faces the blade root (150) and its hollow (220) is oriented toward the bottom (171) of the cell, **characterized in that** the blades (15) are with variable pitch, **in that** each fastener (16) is rotatably mounted relative to said rotor disc around a radial pitch axis (Y), **in that** the central portion (153) of the blade root (150) has a recess (154), **in that** said blade root (150) is arranged in the cell (17) so that its recess (154) is oriented toward the bottom (171) of the cell (17), **in that** a prestressing rod (3) with at least one cam (33) is also arranged in each cell (17), **in that** said wedge (2) is arranged in the cell (17) so that its domed portion (221) faces the recess (154) of the blade root (150), **in that** the bottom (171) of said cell (17) comprises as many retraction cavities (173) as the rod (3) has cams (33), **in that** said prestressing rod (3) is interposed between the hollow (220) of the central region (22) of said wedge (2) and the bottom (171) of the cell (17), so that said cam (33) faces the corresponding retraction cavity (173) and **in that** said prestressing rod (3) is movable in rotation around its longitudinal axis (X2-X'2), so as to be able to be moved between a resting position, in which the cam (33) is housed in the retraction cavity (173), and an armed position, in which the cam (33) exerts a radial pressure on the central region (22) of the wedge (2) so as to move said wedge (2) in the direction of the blade root (150) and so that the two lateral regions (23,24) of said wedge, arranged on either side of its central region (22), are in contact with corresponding lateral regions (151,152) of the blade root (150) and are remote from the bottom (171) of the cell (17).

2. The fan rotor according to claim 1, **characterized in that** there exists a functional clearance (J1) between the recess (154) of the blade root (150) and the domed portion (221) of the central region (22) of the wedge (2) arranged facing, the clearance (J1) being greater in the resting position of the rod than when the rod is in the armed position.

3. The fan rotor according to claim 1 or 2, **characterized in that** the bottom (171) of the cell (17) is provided with a longitudinal groove (172) intended to receive and to guide the prestressing rod (3) and **in that** said retraction cavities (173) are provided in this groove (172).

4. The fan rotor according to any one of the preceding claims, **characterized in that** the wedge (2) has a greater thickness (E1) in its central region (22) than the thickness (E2) of its ends (23, 24).

5. The fan rotor according to any one of the preceding claims, **characterized in that** said wedge (2) consists of several sections (20a, 20b, 20c) connected by narrower junctions (21).

6. The fan rotor according to any one of the preceding claims, **characterized in that** a setting foil (4) is arranged at the bottom of the cell (17) of the fastener (16).

7. The fan rotor according to any one of the preceding claims, **characterized in that** one of the ends of the prestressing rod (3), preferably its upstream end (31), has a shape, such as cut-aways, which allows its gripping and its driving in rotation around its longitudinal axis (X2-X'2) by a tool.

8. The fan rotor according to one of the preceding claims, **characterized in that** the prestressing rod (3) has, in proximity to one of its ends, preferably its upstream end (31), a poka-yoke (34) which extends radially relative to the longitudinal axis (X2-X'2) of said rod (3) and which protrudes from the same side of the rod (3) as the cams (33) protrude.

9. The fan rotor according to claim 8, **characterized in that** an upstream axial retention lock (6) of the blade root (150), formed from a plate (60), is inserted into two upstream slots (1612, 1622) provided at the upstream end of the flanks (161, 162) of said cell (17) for receiving the blade root (150), these two upstream slots (1612, 1622) being arranged in a V, and **in that** a rod lock (7) is fastened to said upstream axial retention lock (6), this rod lock (7) being provided with an opening (71) for receiving one of the ends of the prestressing rod (3), preferably its upstream end (31), and with a notch (73) for receiving the poka-yoke (34) of said rod (3) so as to block said prestressing rod (3) in the armed position.

10. The fan rotor according to any of the preceding claims, **characterized in that** a downstream axial retention lock (5) of the blade root (150), formed from a plate (50), is inserted into two downstream slots (1611, 1621) provided at the downstream end of the flanks (161, 162) of said cell (17) for receiving the blade root (150), these two downstream slots (1611, 1621) being arranged in a V, **in that** this downstream lock (5) is drilled with an orifice (58) for receiving the downstream end (25) of said wedge (2) and **in that** the downstream retention lock (50) has, on its inner face (56), a surface (59) forming an axial abutment for the downstream end (32) of said stressing rod (3).

11. The fan rotor according to one of the preceding claims, **characterized in that** said wedge (2) is made of a 3D-woven composite material.

12. The fan rotor according to one of the preceding claims, **characterized in that** the blades (15) are made of a 3D-woven composite material.

13. A turbomachine, **characterized in that** it includes a fan rotor (11, 12) provided with variable pitch blades according to one of claims 1 to 12.
